# EUROPEAN PATENT APPLICATION

(11) **EP 4 793 234 A1**
(43) Date of publication of application: **19.08.2026**
(21) Application number: 25157709.4
(22) Date of filing: 13.02.2025
(51) Int. Cl.: C01B 32/05, C01B 33/00

(54) **METHOD FOR PROCESSING A CARBONACEOUS MATERIAL AND A PROCESSED CARBONACEOUS MATERIAL**

(71) Applicant: Fraunhofer-Gesellschaft zur Förderung der angewandten Forschung e.V., 80686 München (DE)
(72) Inventor: KAISER, Christian, 83626 Valley (DE); ENGELS, Katharina, 83626 Valley (DE); BRANDMILLER, Fabian, 83626 Valley (DE); SCHERER, Katrin, 83626 Valley (DE)
(74) Representative: Maiwald GmbH

(57) **Abstract**

The present disclosure relates to a method for processing a carbonaceous material, comprising: (i) providing a carbonaceous material comprising carbon and a SiO₂-containing solid; (ii) combining the carbonaceous material with a solid alkali reagent to provide a solid composition; (iii) heating the solid composition, thereby at least partially converting the SiO₂-containing solid to a reaction product; and (iv) separating the reaction product from the carbon. The present disclosure further relates to a processed carbonaceous material which is obtainable by the method, and to the use of said processed carbonaceous material.

## Description

### TECHNICAL FIELD

The present invention relates to a method for processing a carbonaceous material. The present invention further relates to a processed carbonaceous material which is obtainable by the method of the present invention, and to the use of the processed carbonaceous material.

### BACKGROUND

Carbonaceous materials find widespread use in a variety of technical fields. For example, carbonaceous materials are used for catalysts, in electronic components, like batteries, as fillers or pigments. The purity and structure of carbonaceous materials are typically important factors to ensure the reliability and effectiveness of said materials. For example, carbon black is a carbonaceous material which exhibits characteristic properties, like a specific surface area, particle size and conductivity. Carbon black is almost fully composed of pure elemental carbon (>97%). Carbon black is widely used as a coloring pigment or reinforcing filler, for example, in the rubber and tire industry.

Efforts have been made in the art to process or purify carbonaceous materials to remove impurities. The removal of hardly water soluble inorganic impurities, like silica- or silicate-containing impurities, from carbonaceous materials however remains challenging. For example, raw products are available which are obtained from pyrolyzing waste materials, like rubber waste which originates from waste tires. Such raw products can contain a substantial amount of recovered carbon black together with hardly water soluble inorganic compounds including silica- or silicate-containing materials and other additives from the (rubber) waste materials.

Wet chemical purification processes may be used for purifying carbonaceous materials from inorganic impurities, like silica- or silicate-containing impurities. However, known wet chemical processes for processing or purifying carbonaceous materials can require using substantial amounts of process water along with other chemical reagents. Proper disposal, decontamination, and/or recycling of process water is typically laborious.

WO2021005124A1 relates to a process for processing and/or purifying carbonaceous solids comprising the steps of: a) providing a mixture comprising a carbonaceous solid and at least one inorganic compound; b) providing an aqueous fluid comprising a nitrogen hydride; c) providing an alkali hydroxide and/or an alkali metal; d) contacting the mixture of step a), the aqueous fluid of step b) and the alkali metal hydroxide and/or alkali metal of step c); e) subjecting the composition obtained in step d) to a specific temperature and/or pressure; and f) separating a carbonaceous solid from the composition obtained in step e).

There is a continuing demand in the art for processes for purifying carbonaceous materials from inorganic compounds, and particularly from silica- or silicate-containing materials. In addition, such processes should ideally not have a detrimental effect on the structure and/or morphology of the carbon which is present in the carbonaceous material.

### SUMMARY

It is an object of the present invention to provide a method for processing a carbonaceous material, wherein the method is suitable to separate SiOz-containing solid, which is present in the carbonaceous material (e.g., as part of a mixture of inorganic impurities), from the carbon of the carbonaceous material.

A more specific object may be seen in the provision of a method for processing a pyrolysis product, wherein the method is suitable to separate SiOz-containing solid, which is present in the pyrolysis product (e.g., as part of a mixture of inorganic impurities), from the carbon of the pyrolysis product.

One aspect of the present invention provides a method for processing a carbonaceous material. The method comprises:
(i) providing a carbonaceous material comprising carbon and a SiOz-containing solid;
(ii) combining the carbonaceous material with a solid alkali reagent to provide a solid composition;
(iii) heating the solid composition, thereby at least partially converting the SiOz-containing solid to a reaction product; and
(iv) separating the reaction product from the carbon.

The present invention is based on the finding that the heating of carbonaceous material comprising carbon and a SiOz-containing solid in the presence of a solid alkali reagent at least partially converts the SiOz-containing solid to a reaction product. The reaction product is easier separable from the carbon. For example, the reaction product may have a higher water solubility than the SiO₂-containing solid so that it is easier separable by a conventional washing step. The reaction product may be present or enriched in an agglomerated form which can be mechanically separated. The heating or reaction of the solid composition is carried out in the absence of an aqueous solvent. Thereby, a substantial amount of process water can be saved when compared to a wet chemical processing of carbonaceous materials.

In one embodiment, the carbonaceous material is a pyrolysis product, which is preferably obtained from a process comprising pyrolysis of rubber waste which is at least partially derived from waste tires.

In one embodiment, the carbon is at least partially present in the form of a recovered carbon black.

In one embodiment, the SiOz-containing solid comprises crystalline silica, amorphous silica, or a mixture thereof.

In one embodiment, the SiOz-containing solid is part of a mixture of inorganic compounds, which preferably at least further comprises one or more zinc-containing compounds, and more preferably zinc oxide and/or zinc sulfide.

In one embodiment, the carbon is present in the carbonaceous material in an amount of at least 60 wt.%, and preferably at least 70 wt.%, based on a total weight of the carbonaceous material.

In one embodiment, the SiOz-containing solid is part of a mixture of inorganic compounds, which is present in the carbonaceous material in an amount in a range of 5 to 40 wt.%, and preferably in a range of 10 to 30 wt.%, based on a total weight of the composition.

In one embodiment, the solid alkali reagent is selected from the group consisting of alkali metal oxides, alkali metal hydroxides, and any mixtures thereof, and preferably wherein the solid alkali reagent is NazO, NaOH, KOH, or a combination thereof, which is optionally used in combination with one or more additional solid alkali reagents.

In one embodiment, the heating of the solid composition is carried out at a temperature not exceeding 550°C, preferably not exceeding 500°C, and more preferably not exceeding 450°C.

In one embodiment, the heating of the solid composition is carried out under an atmosphere having a reduced oxygen content.

In one embodiment, the reaction product comprises an alkali silicate, preferably a sodium silicate.

In one embodiment, the separating comprises removing an agglomerate from a reaction mixture, which is obtained by the heating of the solid composition, and wherein the agglomerate comprises at least a partial amount of the reaction product.

In one embodiment, the separating comprises washing a reaction mixture, which is obtained from the heating of the solid composition, with an aqueous composition.

In one embodiment, the method is a method for processing a pyrolysis product comprising:
(i) providing a pyrolysis product which is obtained from a process comprising pyrolysis of rubber waste which is at least partially derived from waste tires, wherein the pyrolysis product comprises carbon and a SiO₂-containing solid;
(ii) combining the pyrolysis product with a solid alkali reagent to provide a solid composition,
(iii) heating the solid composition at a temperature not exceeding 550°C, thereby at least partially converting the SiOz-containing solid to a reaction product; and
(iv) separating the reaction product from the carbon.

Another aspect of the present invention provides a processed carbonaceous material which is obtainable by the method according to the present invention.

Yet another aspect of the present invention provides a use of the product according to the present invention as part of an electronic component (e.g., a battery) or as a filler or pigment (e.g., for use in an elastomeric polymer).

Where the term "comprising" is used herein, it does not exclude that further non-specified elements are present. Where the term "essentially consisting of" or "essentially composed of" is used herein, it is does not exclude that further non-specified elements are present that are not materially affecting the essential characteristics of the defined subject-matter. For the purposes of the present invention, the terms "essentially consisting of", "essentially composed of", and "consisting of" are considered to be specific embodiments of the term "comprising". Whenever the terms "containing", "including" or "having" are used, these terms are meant to be equivalent to "comprising" as defined above.

### FIGURES

FIG.1 shows an x-ray diffraction spectrum taken from a (non-ashed) sample of a raw recovered carbon black (raw rCB). The intensity [counts] is given on the y-axis and the diffraction angle [°2θ] is given on the x-axis.
FIG. 2 shows an x-ray diffraction spectrum taken from a (non-ashed) sample of the coarse fraction of example IE2 before washing with water. The intensity [counts] is given on the y-axis and the diffraction angle [°20] is given on the x-axis.

### DETAILED DESCRIPTION

### I. Method

One aspect of the present invention provides a method for processing a carbonaceous material. The method comprises:
(i) providing a carbonaceous material comprising carbon and a SiOz-containing solid;
(ii) combining the carbonaceous material with a solid alkali reagent to provide a solid composition;
(iii) heating the solid composition, thereby at least partially converting the SiOz-containing solid to a reaction product; and
(iv) separating the reaction product from the carbon.

The processing of the carbonaceous material may comprise, or may be carried out with the purpose of, purifying the carbonaceous material, e.g., from an inorganic compound (inorganic impurity), and particularly from a SiOz-containing solid as described herein. Accordingly, the method may be a method for purifying a carbonaceous material, e.g., from an inorganic compound (inorganic impurity), and particularly from a SiOz-containing solid as described herein.

The term "purifying" is to be understood in a broad sense in that one or more minor components (impurities) are at least partially removed from a main component. The term "purifying" does not require that the main component is provided in substantially pure form (although this is not excluded).

### 1. Step (i)

The method comprises providing a carbonaceous material comprising carbon and a SiOz-containing solid. A "carbonaceous material" in the meaning of the present disclosure is a material which comprises elemental carbon in an amount of at least 50 wt.%, based on the total weight of the carbonaceous material.

The carbon which is present in the carbonaceous material is present in elemental form, i.e., is elemental carbon. The carbon is not particularly limited in form of its structure or morphology. The carbon may be present in different structures or morphologies. The carbon may comprise char, a (recovered) carbon black, or a combination thereof. Thus, the carbon may be partially or fully present in form of a char, a (recovered) carbon black, or a combination thereof. In one embodiment, the carbon comprises or is composed of a (recovered) carbon black, optionally in combination with a char. The char may be present in a minor amount in comparison with the amount of (recovered) carbon black. The term "recovered carbon black" as used herein refers to carbon black which is recovered from a carbon black-containing waste material, and preferably waste (elastomeric) polymers, like rubber waste such as industrial rubber waste or rubber waste derived from waste tires.

The carbon may predominantly exhibit a morphology which is characteristic for carbon black. The morphology of carbon black is known to the person with skill in the art. The carbon may partially or fully exhibit a morphology of agglomerated (colloidal) aggregates which are formed by a plurality of fused primary carbon particles (e.g., having a primary particle size in a range of 10 to 300 nanometers).

Preferably, the carbon comprises or is at least partially present in form of a recovered carbon black. The carbon may be composed of a recovered carbon black, optionally in combination with a char. The recovered carbon black is preferably partially or fully recovered from waste rubber, and more preferably from waste rubber which is partially or fully derived from waste tires.

The SiOz-containing solid may be one SiOz-containing solid. More typically, the SiOz-containing solid is a mixture of two or more SiOz-containing solids. The SiOz-containing solid may be, but is not necessarily limited to, crystalline silica, amorphous silica, or a mixture thereof. The term "silica" and "silicate" is used synonymously herein. The crystalline silica may be, but is not limited to, mineral silicates, synthetic silicates, or quartz. The amorphous silica may be, but is not necessarily limited to, a synthetic amorphous silica. In one preferred embodiment, the SiOz-containing solid comprises quartz, amorphous silica, or a mixture thereof.

The SiOz-containing solid typically has a very low water solubility. The SiOz-containing solid usually has a water solubility of less than 1 g/L or even less than 0.5 g/L. The water solubility may be determined at a temperature of 20°C (at atmospheric pressure).

The SiOz-containing solid is typically part of a mixture of inorganic compounds which is present in the carbonaceous material. The mixture of inorganic compounds may be referred to as a mixture of inorganic impurities. The mixture of inorganic compounds comprises inorganic compounds which are different to the SiO₂-containing solid(s). In other words, the carbonaceous material typically comprises a mixture of inorganic compounds comprising the SiOz-containing solid. The carbonaceous material may comprise a mixture of inorganic compounds which is composed of the SiOz-containing solid(s) and inorganic compounds which are different to the SiOz-containing solid(s). The inorganic compounds which are different to the SiOz-containing solid are also referred to herein as "additional inorganic compound(s)". The additional inorganic compounds are not particularly limited. The additional inorganic compounds may be, but are not limited to, salts or oxides or Mg, Al, Ca, Ti, Fe, Co, Cu, Zn, Sn, or any combination thereof. The additional inorganic compounds typically have a very low water solubility. The additional inorganic compounds may have a water solubility of less than 1 g/L or even less than 0.5 g/L. The water solubility may be determined at a temperature of 20°C (at atmospheric pressure).

The additional inorganic compounds may comprise one or more Fe-containing compound (e.g., iron oxide and/or iron sulfide), one or more Mg-containing compound (e.g., MgO and/or Mg-containing minerals, like talc and/or montmorillonite), one or more Zn-containing compound (e.g., zinc oxide and/or zinc sulfide), one or more Al-containing compound (e.g., aluminum oxide), or a mixture thereof. In one embodiment, the mixture of inorganic compounds at least further comprises (in addition to the SiOz-containing solid(s)) zinc oxide, aluminum oxide, or a mixture thereof, and optionally in combination with one or more additional inorganic compounds.

The carbonaceous material is typically provided in form a solid mixture, like a particle mixture (e.g., a powder). The carbonaceous material may have particle size of below 5 mm, like below 2 mm, or below 1 mm. The carbonaceous material may have a median particle size d50 in a range of from 25 to 750 µm, like in a range from 25 to 500 µm, like in a range from 25 to 250 µm, like in a range of 25 to 150 µm. In one embodiment, the carbonaceous material has median particle size d50 in a range of from 40 to 100 µm. The median particle size d50 may be a volume-based median particle size d50 as determined by laser diffraction.

The carbonaceous material is typically provided in dry form. The carbonaceous material may have a heating loss determined at 125°C of less than 10 wt.%, preferably less than 5 wt.%, like less than 2.5 wt.% or equal to or less than 1 wt.%, based on the total weight of the carbonaceous material. The heating loss may be determined according to the method described in ASTM1509-15. The heating loss may primarily be due to loss of moisture (but other volatile material may also be lost). Accordingly, the carbonaceous material may have a residual moisture content of less than 10 wt.%, preferably less than 5 wt.%, like less than 2.5 wt.% or equal to or less than 1 wt.%, based on the total weight of the carbonaceous material.

The carbonaceous material may comprise toluene extractables of less than 10 wt.%, preferably less than 5 wt.%, like less than 2 wt.%, based on the total weight of the carbonaceous material. A toluene extract of the carbonaceous material may have a transmission of more than 90%, preferably more than 95%, like more than 98%. The amount of toluene extractables and the transmission of the toluene extract may be determined according to the method described in ASTM D1618-17. The toluene extractables may primarily be organic oils (other organic materials, like organic volatiles, may also be extracted). Accordingly, the carbonaceous material may have a residual content of organic oils (e.g., pyrolysis oils) in an amount of less than 10 wt.%, preferably less than 5 wt.%, like less than 2 wt.%, based on the total weight of the carbonaceous material.

According to one embodiment, the carbonaceous material is characterized by:
- a heating loss, determined according to ASTM1509-15, of less than 5 wt.%, like less than 2.5 wt.%, based on the total weight of the carbonaceous material;
- a toluene extract, determined according to ASTM1618-17, having a transmission of more than 95%, like more than 98%;
- a volume-based median particle size d50, determined by laser diffraction, is a range of from 25 to 250 µm, like in a range of from 25 to 150 µm.

The carbonaceous material preferably comprises the carbon in an amount of at least 60 wt.%, preferably at least 65 wt.%, and more preferably at least 70 wt.%, like at least 72 wt.% or at least 74 wt.%, based on the total weight of the carbonaceous material. An upper limit of the carbon content in the carbonaceous material may be 95 wt.%, 92 wt.%, 90 wt.%, 88 wt.%, or 85 wt.%, based on the total weight of the carbonaceous material. Accordingly, the carbonaceous material may comprise the carbon in an amount in a range of from 60 to 95 wt.%, from 65 to 92 wt.%, from 70 to 90 wt.%, from 72 to 88 wt.%, or 74 to 85 wt.%, based on the total weight of the carbonaceous material.

The carbonaceous material may comprise the SiOz-containing solid(s) in an amount in a range of from 1 to 20 wt.%, preferably from 2 to 18 wt.%, more preferably from 4 to 15 wt.%, like from 6 to 10 wt.%, based on the total weight of the carbonaceous material.

The carbonaceous material may comprise one or more Zn-containing compound (e.g., zinc oxide and/or zinc sulfide) in an amount in a range of from 1 to 10 wt.%, from 2 to 8 wt.%, or from 3 to 6 wt.%, based on the total weight of the carbonaceous material.

The carbonaceous material typically comprises a mixture of inorganic compounds which comprises the SiO₂-containing solid(s). The carbonaceous material may comprise the mixture of inorganic compounds in an amount in a range of from 5 to 40 wt.%, preferably from 8 to 35 wt.%, more preferably from 10 to 30 wt.%, like from 12 to 28 wt.% or from 15 to 26 wt.%, based on the total weight of the carbonaceous material.

The carbonaceous material may be a (solid) pyrolysis product. Thus, the carbonaceous material may be a (solid) product which is obtained from a pyrolysis process. Preferably, the pyrolysis product is obtained from a (recycling) process comprising the pyrolysis of waste material. The waste material may comprise or may be a rubber waste. The rubber waste may be partially or fully derived from waste tires or waste industrial rubber (e.g., rubber conveyer belts or the like). Such rubber waste typically comprises a comparatively high amount of carbon, and particularly carbon black, as pigments and/or reinforcing filler. Preferably, the rubber waste is partially or fully derived from waste tires.

Suitable (recycling) processes for providing the pyrolysis product are known in the art. Typically, the process comprises the thermal treatment of the rubber waste in an essentially oxygen free atmosphere in order to decompose the polymeric and/or hydrocarbon components of the rubber waste. The decomposition provides gases and volatile organic compounds which are condensed off (pyrolysis oils), thereby providing a (solid) pyrolysis product. The pyrolysis product may be rich in carbon, and particularly (recovered) carbon black. The solid residue typically further comprises a plurality of inorganic compounds. The inorganic compounds may comprise additives originating from the rubber waste. In case of waste tires, the inorganic compounds typically comprises a substantial amount of SiOz-containing solids (e.g., quartz and/or amorphous silica) and zinc-containing solids (e.g., zinc oxide and/or zinc sulfide) which are used as additives in polymer formulations for tires. The (recycling) process may comprise additional steps of processing the pyrolysis product, like removing metallic components, and the like. It is to be understood that the (solid) pyrolysis product may be further defined by one or more features described herein above for the carbonaceous material.

### 2. Step (ii)

The method further comprises combining the carbonaceous material with a solid alkali reagent to provide a solid composition.

The solid alkali reagent may be an alkali metal, an alkali oxide, an alkali hydroxide, or any combination thereof. Preferably, the solid alkali reagent is an alkali oxide, an alkali hydroxide, or a combination thereof. More preferably, the solid alkali reagent is selected from the group consisting of LizO, LiOH, NazO, K₂O, NaOH, KOH, or any combination thereof. Even more preferably, the alkali reagent is selected from the group of NazO, NaOH, KOH, or any combination thereof.

In one embodiment, the solid alkali reagent is a solid sodium reagent, and preferably a solid NazO and/or NaOH. In one particular embodiment, the solid alkali reagent is at least NaOH. In one particular embodiment, the solid sodium reagent is NaOH which is optionally present in combination with NazO. The solid sodium reagent may be present in combination with one or more additional solid alkali reagents, like one or more solid potassium reagents (e.g., K₂O and/or KOH).

In one particular embodiment, the solid alkali reagent is Na₂O. In one particular embodiment, the solid alkali reagent is a combination of NaOH and Na₂O, optionally in a molar ratio (NaOH:Na₂O) in a range of from 5.0:0.1 to 0.1:5.0, from 3.0:0.1 to 0.1:3.0, from 2.0:0.2 to 0.2:2.0, from 1.5:0.5 to 0.5:1.5, or from 1.2:0.6 to 0.6:1.2, or of about 1.0:0.8). In one particular embodiment, the solid alkali reagent is a combination of KOH and NaOH, optionally in a molar ratio (KOH:NaOH) in a range of from 5.0:0.1 to 0.1 :5.0, from 3.0:0.1 to 0.1:3.0, from 2.0:0.2 to 0.2:2.0, from 1.5:0.5 to 0.5:1.5, or from 1.2:0.6 to 0.6:1.2, or of about 1.0:1:0). A combination of KOH and NaOH typically has a comparatively low melting point. Accordingly, a melt of said combination of alkali reagents may be obtained by heating the solid composition at a comparatively low temperature.

The solid alkali reagent may be in form of, but is not necessarily limited to, granules, powder or flakes.

The combining of the carbonaceous material with the solid alkali reagent may be carried out by any suitable means. The combining may comprise (or may be) a mixing of the carbonaceous solid with solid alkali reagent. The combining provides a solid composition. Accordingly, the combining does not include an additional step of adding a liquid solvent, like an aqueous solvent (water) and/or an organic solvent. In other words, the solid composition is not a liquid (aqueous) suspension. The solid composition may be substantially free of a liquid (aqueous) solvent.

The solid composition at least comprises the carbon, the SiOz-containing solid(s), and the solid alkali reagent, and optionally any other component which may be present in the provided carbonaceous material. The solid composition may be a solid mixture of the carbonaceous material and the solid alkali reagent. The solid composition may be ground prior to step (iii) to provide a ground, solid composition. The grinding may increase the homogeneity of the solid composition.

The solid composition may comprise the carbonaceous material and the solid alkali reagent in a weight ratio [carbonaceous material:solid alkali reagent] of from 50:1 to 1:2, like from 40:1 to 1:1, like from 20:1 to 2:1, like from 10:1 to 5:1.

The solid composition may be charged to, or may be present in, a reactor or reaction vessel which is suitable for carrying out the method as described herein. A suitable reactor or reaction vessel may be selected by a person of skill in the art.

### 3. Step (iii)

The method further comprises heating the solid composition.

The heating is typically carried out at a temperature which does not exceed 550°C, preferably does not exceed 500°C, even more preferably does not exceed 480°C, and even more preferably does not exceed 450°C. In one particular embodiment, the heating is carried out at a maximum temperature of about 440°C. The heating is typically carried out at a temperature of above 150°C. The heating may be carried out at a temperature in a range of from 200°C to 550°C, preferably from 250°C to 500°C, more preferably from 300°C to 480°C, and more preferably from 350 to 450°C, like from 380°C to 440°C.

The inventors have found that, when the heating does not exceed a certain maximum temperature, it is possible to reduce or eliminate a decomposition of the structure or morphology of the carbon which is present in the carbonaceous material used as a starting material. This is particularly advantageous in case the carbon exhibits a desirable morphology, like a morphology of (recovered) carbon black. Thus, when the heating does not exceed the maximum temperature, it is possible to partially or fully maintain the desirable structure or morphology when carrying out the method.

The time period for carrying out the heating is not particularly limited and may depend on the conversion rate of the reagents and/or the formation rate of the reaction product. For example, the heating may be carried out at a selected maximum temperature for a time period in a range of from 10 minutes to 12 hours, from 30 minutes to 8 hours, from 1 to 6 hours, or from 1 to 4 hours, like for about 2.5 hours or for about 4 hours.

The heating may be carried out in an atmosphere with a reduced oxygen content. Thereby, an undesired oxidation of the carbon may be reduced or avoided. The heating may be carried out in an atmosphere which is substantially free of oxygen. The heating may be carried out in a protective gas atmosphere. The heating may be carried using a protective gas, like nitrogen or argon. Thus, the method may comprise an additional step before the heating of reducing the oxygen content (e.g., in a reactor or a reaction vessel) and/or purging (e.g., a reactor or a reaction vessel) with a protective gas.

The heating may be carried out such that a reaction melt is formed which comprises molten alkali reagent (e.g., molten NaOH, molten KOH, or a combination thereof). Thus, the heating may be carried out at a temperature which is suitable for at least partially melting a solid alkali reagent which is present in the solid composition (e.g., NaOH, KOH, or a combination thereof). Accordingly, a reaction melt may form during the heating of the solid composition and the solid alkali reagent. The reaction melt may comprise molten alkali reagent (e.g., molten NaOH, molten KOH, or a combination thereof). The molten alkali reagent may react with parts of the solid composition, and particularly with (parts of) the SiOz-containing solid. Without wishing to be bound by theory, the inventors believe that the melting of a solid alkali reagent during the heating advantageously increases its reactivity towards the SiOz-containing solid. Therefore, it may be desirable to use a solid alkali reagent which has a comparatively low melting point (e.g., NaOH, KOH, or a combination thereof), optionally in combination with one or more additional solid alkali reagents having a higher melting point (e.g., NazO).

The heating of the solid composition at least partially converts the SiOz-containing solid to a reaction product. The SiOz-containing solid may be partially or fully converted to the reaction product.

The reaction product is obtained as part of a reaction mixture. Accordingly, the heating provides a reaction mixture which at least comprises carbon and the reaction product, and optionally one or more additional reaction products, unreacted material and/or excess alkali reagent. The one or more additional reaction products may be one or more reaction products which are formed by at least partially converting one or more additional inorganic compounds of the carbonaceous material.

The reaction product typically comprises (or is essentially composed of) a SiOz-containing material which has a comparatively high water solubility. The reaction product may comprise (or is essentially composed of) a SiOz-containing material which has a water solubility of at least 10 g/L, at least 20 g/L, or at least 50 g/L. The water solubility may be determined at a temperature of 20°C (at atmospheric pressure). The reaction product may comprise (or may essentially be composed of) an alkali silicate, preferably a sodium silicate, potassium silicate, or a combination thereof, and more preferably a sodium silicate (optionally in combination with one or more other alkali silicates, like a potassium silicate). The one or more additional reaction products may comprise (or may be) one or more additional reaction products having a water solubility of at least 10 g/L, at least 20 g/L, or at least 50 g/L.

The heating of the solid composition may lead to the formation of an agglomerate. The reaction product may at least partially be present in an agglomerated form. The agglomerate or the agglomerated form of the reaction product may have a coarser particle size when compared to the particle size of the carbonaceous material. Accordingly, the reaction mixture may comprise a fine fraction and a coarse fraction. The coarse fraction may comprise the agglomerate or the agglomerated from of the reaction product. The agglomerate may comprise the reaction product (preferably an alkali silicate, like a sodium silicate and/or a potassium silicate), optionally in combination with excess alkali reagent and/or one or more additional reaction products.

### 4. Step (iv)

The method further comprises partially or fully separating the reaction product from the carbon. The reaction product and the carbon are present in the reaction mixture obtained by the heating of the solid composition. The step of separating the reaction product from the carbon provides a processed carbonaceous material.

The separating step may comprise the washing of the reaction mixture with an aqueous composition. The aqueous composition is not particularly limited. The aqueous composition may be an aqueous solution, like water or a mixture of water and an organic solvent. Preferably, the aqueous composition is water. The aqueous composition, preferably water, may have an elevated temperature, like a temperature in a range of from 30 to 80°C or from 40 to 70°C, like about 60°C. The aqueous composition may be acidic, basic, or neutral.

The washing partially or fully dissolves the reaction product from the reaction mixture, thereby allowing to remove the dissolved reaction product, e.g., by filtration. The washing may be carried out one or more times, or as long as reaction product is still dissolved from the reaction mixture. In one preferred embodiment, the reaction product is separated from the carbon by washing the reaction mixture.

Additionally or alternatively, the separating step may comprise removing an agglomerate comprising the reaction product from the reaction mixture. In other words, the separating step may comprise removing an agglomerated form of the reaction product from the reaction mixture. The removal of the agglomerate provides a residual reaction mixture. The residual reaction mixture may have a lower content of the reaction product. Thus, by removing the agglomerate from the reaction mixture, the reaction product may at least partially be separated from the carbon. The removing of the agglomerate may be followed by a washing, e.g., a washing step as described herein above, of the agglomerate and/or of the residual reaction mixture.

More specifically, the separating step may comprise separating a coarse fraction from the reaction mixture. The coarse fraction may be obtained by dividing the reaction mixture into a fine fraction and a coarse fraction. This may be achieved by any suitable means, like sieving (e.g., with a sieve having a mesh size of about 400 µm). The fine fraction may be composed of particles having a particle size of below about 400 µm. The coarse fraction may composed of particles having a particle size of above 400 µm. The particle size distribution of the fractions can be determined as known in the art, e.g., by sieve analysis.

After dividing the reaction mixture into a fine fraction and a coarse fraction, the fine fraction and/or the coarse fraction may be washed, e.g., by a washing step as described herein above, to provide two different fractions of a processed carbonaceous material. The two different fractions of the processed carbonaceous material may be combined or, in the alternative, further processed separately. This may depend on the purity of each one of the carbonaceous fractions, and particularly the carbon contents and/or the content of residual SiOz-containing solids.

In one embodiment, the separating step comprises dividing the reaction mixture into a fine fraction and a coarse fraction, and washing the fine fraction to provide the processed carbonaceous material. In one embodiment, the separating step comprises dividing the reaction mixture into a fine fraction and a coarse fraction, and washing the coarse fraction to provide the processed carbonaceous material.

The processed carbonaceous material obtained after the separating step may comprise an amount of SiOz-containing solid which is lower by at least 0.5 wt.% or at least 1.0 wt.%, when compared to the amount of SiOz-containing solid being present in the carbonaceous material.

### 5. Optional additional steps

The method may comprise one or more additional steps which may carried out before, between, or after the steps described herein above.

The method may comprise an additional acid washing and/or base washing after the washing step as described herein above. The additional acid washing and/or base washing may be selected to remove one or more additional inorganic compounds which may be present in the reaction mixture or in the fractions thereof.

The method may comprise a recycling and/or an isolation of the reaction product. For example, the method may comprise a recycling and/or an isolation of an alkali silicate, like a sodium silicate and/or a potassium silicate.

The method may further comprise milling, drying, and/or pelletizing processed carbonaceous material.

### II. Product and use

Another aspect of the present invention relates to a processed carbonaceous material which is obtainable by a method according to the present invention.

The processed carbonaceous material may be used as part of an electronic component, like a battery. The processed carbonaceous material may be used as a piment and/or filler, for example, in an elastomeric polymer. The elastomeric polymer may be for use in a polymer formulation of a tire.

Yet another aspect of the present invention provides the use of a processed carbonaceous material as part of an electronic component or as a filler and/or pigment. In one embodiment, the processed carbonaceous material is used as part of an electronic component, and particularly a battery. In another embodiment, the processed carbonaceous material is used as a filler and/or pigment, and particularly for an elastomeric polymer, e.g., an elastomeric polymer may be for use in a polymer formulation of a tire.

Accordingly, the method may comprise a step of using the processed carbonaceous material as part of an electronic component (e.g., a battery) or as a filler and/or pigment (e.g., in an elastomeric polymer).

The present invention is further described and illustrated by the following examples which are however not to be construed to limit the present invention in any way.

### III. Example section

### 1. Materials

The alkali reagents, Na₂O and NaOH, were purchased as commercial products and used as received.

A raw recovered carbon black (raw rCB) in form of a solid powder was used as a starting material (carbonaceous material) for the examples. The raw rCB was a pyrolysis product which was obtained from a carbon black recovering process comprising the pyrolysis of waste tires. The raw rCB comprises recovered carbon black and a plurality of inorganic solids.

The raw rCB had a toluene extract with a transmission of about > 98%, determined according to ASTM D1618-17, and a heating loss of 1.46 wt.%, determined according to ASTM D1509-15. The (volume-based) particle size distribution was as follows: d10 = 15.3 µm; d50 = 77.3 µm; d90 = 136 µm; d97 = 173 µm; d100 = 453 µm. The (volume-based) particle size distribution was determined by laser diffraction on an aqueous dispersion prepared from raw rCB and an aqueous solution containing 1% of a PEG dispersant (PEG 1000, CAS No. 25322-68-3, commercially available from Carl Roth GmbH Co.KG).

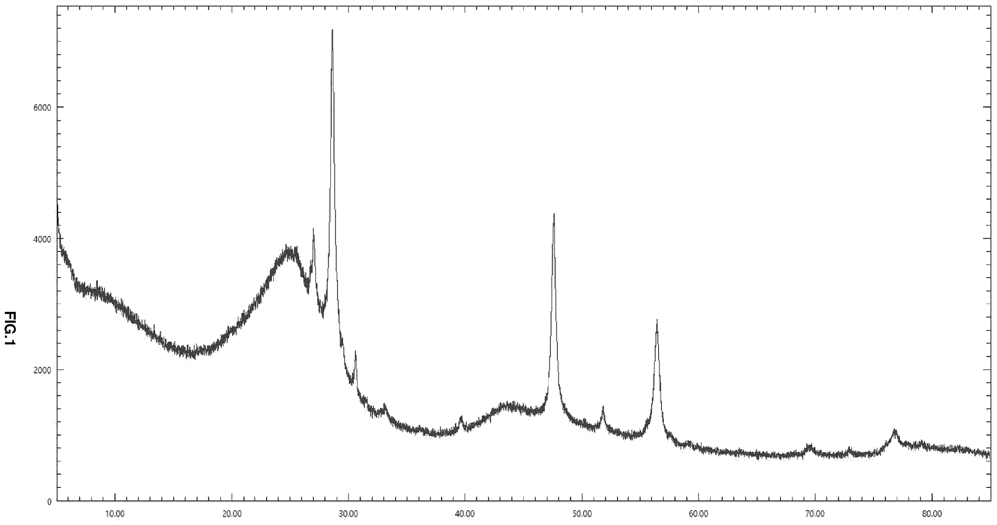

FIG. 1 shows a x-ray diffraction spectrum of a sample from a raw rCB. Table 1 provides properties of a raw rCB including data on loss on ignition (LOI) and an XRF analysis of the ashed sample of the raw rCB. The material was ashed (according to ASTM D1506) at a temperature of 550°C. The loss on ignition (LOI) essentially corresponds to the amount of carbon in the raw rCB.

**Table 1: Analysis of an ashed sample of the raw rCB**

| **Compound** | **Concentration** | **Unit** |
|---|---|---|
| Na₂O | - | % |
| MgO | 0.136 | % |
| Al₂O₃ | 0.787 | % |
| SiO₂ | 8.837 | % |
| P₂O₅ | 0.131 | % |
| SO₃ | 1.282 | % |
| K₂O | 0.174 | % |
| CaO | 0.809 | % |
| TiO₂ | 227.2 | ppm |
| Fe₂O₃ | 0.487 | % |
| Co₃O₄ | 692.1 | ppm |
| CuO | 405 | ppm |
| ZnO | 5.127 | % |
| SnO₂ | 0.167 | % |
| | | |
| Loss on ignition (LOI) | 81.93 | % |

### 2. Examples

**Reference example Ref1**

The raw rCB was washed with demineralized water (60°C) and filtered off. The filtered residue was ashed and analyzed by XRF spectroscopy. The results are shown in Table 2.

**Table 2: Analysis of an ashed sample of example Ref1**

| **Compound** | **Concentration** | **Unit** |
|---|---|---|
| Na₂O | - | % |
| MgO | 0.066 | % |
| Al₂O₃ | 0.429 | % |
| SiO₂ | 8.840 | % |
| P₂O₅ | 0.161 | % |
| SO₃ | 1.192 | % |
| K₂O | 0.138 | % |
| CaO | 0.785 | % |
| TiO₂ | 217.7 | ppm |
| Fe₂O₃ | 0.495 | % |
| Co₃O₄ | 692.0 | ppm |
| CuO | 302.8 | ppm |
| ZnO | 5.292 | % |
| SnO₂ | 0.271 | % |
| | | |
| Loss on ignition (LOI) | 81.60 | % |

The analytical results provided in Table 2 for the product obtained in example Ref1 are very similar to the results shown in Table 1. In particular, the SiO₂ content and the LOI is essentially unchanged. This shows that the inorganic compounds in the raw rCB (including the SiO-containing solids) are hardly water soluble, or even water insoluble, and cannot be separated by washing with demineralized water (60°C).

### Inventive example IE1

The raw rCB (about 10 g) was mixed with NaOH (about 1.7 g) in a reaction vessel. The reaction vessel was purged with nitrogen and heated to 440°C. The temperature was maintained at 440°C for 2.5 h. During the heating, the NaOH melted to form a melt which reacted with the raw rCB to provide an amorphous/semi-crystalline/crystalline reaction mixture. The reaction mixture was allowed to cool down and washed with demineralized water (60°C). After the washing with water, the solid residue was ashed and analyzed by XRF spectroscopy. The results are provided in Table 3.

**Table 3: Analysis of an ashed sample of the product obtained in example IE1**

| **Compound** | **Concentration** | **Unit** |
|---|---|---|
| Na₂O | - | % |
| MgO | 280.2 | ppm |
| Al₂O₃ | 0.475 | % |
| SiO₂ | 7.957 | % |
| P₂O₅ | 0.107 | % |
| SO₃ | 2.756 | % |
| K₂O | 0.128 | % |
| CaO | 0.924 | % |
| TiO₂ | 261.5 | ppm |
| Fe₂O₃ | 0.532 | % |
| Co₃O₄ | 729.9 | ppm |
| CuO | 525 | ppm |
| ZnO | 5.715 | % |
| SnO₂ | 0.235 | % |
| | | |
| Loss on ignition (LOI) | 80.94 | % |

Table 3 shows that the washed, solid residue has a lower SiO₂ content, compared to the raw rCB. This indicates that at least some of the SiO₂-containing material in the raw rCB has been converted into a water-soluble reaction product that can be separated from the reaction product by washing with water.

### Inventive example IE2

A sample of the raw rCB (about 10 g) was mixed with Na₂O (about 1.3 g) in a reaction vessel. The reaction vessel was purged with nitrogen and heated to 440°C. The temperature was maintained at 440°C for 2.5 h. A sodium silicate-containing phase agglomerated during the reaction. The reaction mixture was cooled down and separated by sieving (mesh size: about 400 µm) to provide a fine fraction (<400 µm) and a coarse fraction (>400 µm). The coarse fraction contained agglomerate which formed during the reaction. Each one of the fine fraction and the coarse fraction was washed with demineralized water (60°C) to provide a washed residue.

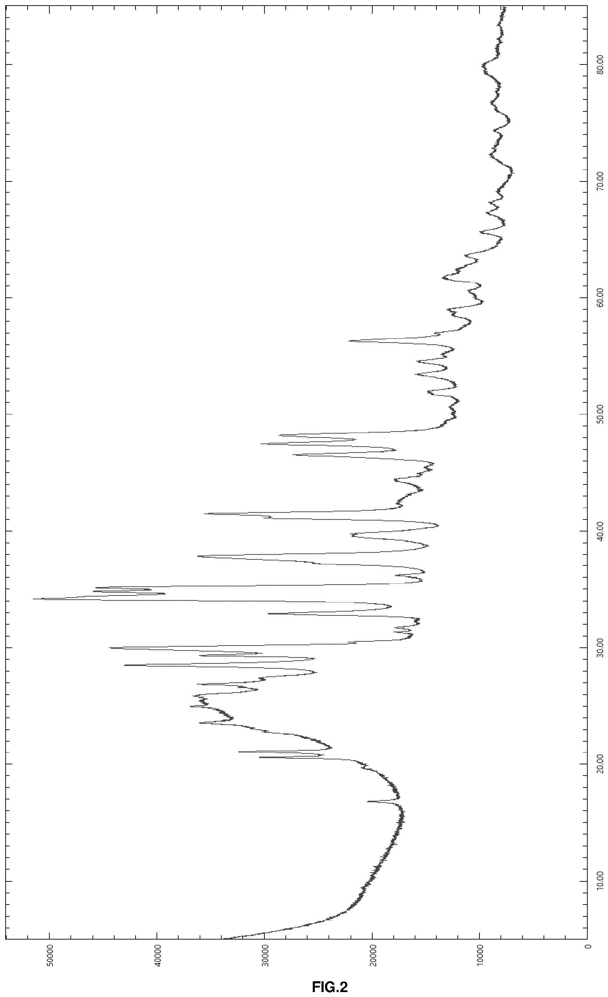

FIG.2 shows an x-ray diffraction spectrum of a sample from the coarse fraction before washing with water. Table 4a provides an analysis (loss on ignition (LOI) and XRF analysis of the ash) of the fine fraction before and after washing with water. Table 4b provides an analysis (loss on ignition (LOI) and XRF analysis of the ash) of the coarse fraction before and after washing with water.

**Table 4a: Analysis of an ashed sample of the fine fraction of example IE2 taken before and after washing**

| **Analysis of fine fraction before washing** | | |
|---|---|---|
| **Compound** | **Concentration** | **Unit** |
| Na₂O | 1.826 | % |
| MgO | 40.3 | ppm |
| Al₂O₃ | 0.47 | % |
| SiO₂ | 9.153 | % |
| P₂O₅ | - | % |
| SO₃ | 3.57 | % |
| K₂O | 0.162 | % |
| CaO | 0.83 | % |
| TiO₂ | 208.5 | ppm |
| Fe₂O₃ | 0.475 | % |
| Co₃O₄ | 701.3 | ppm |
| CuO | 498.3 | ppm |
| ZnO | 5.248 | % |
| SnO₂ | 0.349 | % |
| | | |
| Loss on ignition (LOI) | 77.72 | % |
| | | |

| **Analysis of fine fraction after washing** | | |
|---|---|---|
| Compound | Concentration | Unit |
| Na₂O | - | % |
| MgO | 691.1 | ppm |
| Al₂O₃ | 0.466 | % |
| SiO₂ | 9.426 | % |
| P₂O₅ | 0.174 | % |
| SO₃ | 1.676 | % |
| K₂O | 0.122 | % |
| CaO | 0.905 | % |
| TiO₂ | 164 | ppm |
| Fe₂O₃ | 0.537 | % |
| Co₃O₄ | 722.1 | ppm |
| CuO | 543.9 | ppm |
| ZnO | 5.599 | % |
| SnO₂ | 0.277 | % |

**Table 4b: Analysis of an ashed sample of the coarse fraction of example IE2 taken before and after washing**

| **Analysis of coarse fraction before washing** | | |
|---|---|---|
| **Compound** | **Concentration** | **Unit** |
| Na₂O | 42.51 | % |
| MgO | - | % |
| Al₂O₃ | 0.783 | % |
| SiO₂ | 13.415 | % |
| P₂O₅ | - | % |
| SO₃ | - | % |
| K₂O | 0.237 | % |
| CaO | 1.22 | % |
| TiO₂ | - | ppm |
| Fe₂O₃ | 0.561 | % |
| Co₃O₄ | - | ppm |
| CuO | 521.1 | ppm |
| ZnO | 5.871 | % |
| SnO₂ | 1.17 | % |
| | | |
| Loss on ignition (LOI) | 33.95 | % |
| | | |

| **Analysis of coarse fraction after washing** | | |
|---|---|---|
| Compound | Concentration | Unit |
| Na₂O | 2.449 | % |
| MgO | 0.118 | % |
| Al₂O₃ | 0.463 | % |
| SiO₂ | 6.885 | % |
| P₂O₅ | - | % |
| SO₃ | 3.424 | % |
| K₂O | 0.118 | % |
| CaO | 0.949 | % |
| TiO₂ | 249 | ppm |
| Fe₂O₃ | 0.527 | % |
| Co₃O₄ | 758.2 | ppm |
| CuO | 557.4 | ppm |
| ZnO | 5.652 | % |
| SnO₂ | 0.218 | % |
| | | |
| Loss on ignition (LOI) | 79.03 | % |

As can be seen from the data shown in Tables 4a and 4b, the coarse fraction before the washing has a comparatively high content of SiO₂. The XRD spectrum shown in FIG.2 includes several additional sharp peaks, when compared to the XRD spectrum of the raw RCB shown in FIG.1. It is believed that at least some of the new peaks can be assigned to a sodium silicate phase which has formed (agglomerated) during the reaction.

After the washing of the coarse fraction, the SiO₂ content of the coarse fraction has significantly dropped to 6.88%. This indicates that a significant amount of SiO₂ is present in the coarse fraction in form of a water-soluble sodium silicate phase which can by separated from the carbon black by washing with water. In addition, the data shows that the more water-soluble reaction product (sodium silicate) can be present in enriched form in agglomerates. Thus, removing the agglomerates may be a way to separate reaction product from remaining solids even without using a washing step.

### Inventive example IE3

A sample of the raw rCB (about 10 g) was mixed with Na₂O (about 1.3 g) in a reaction vessel. The reaction vessel with purged with nitrogen and heated to 440°C. The temperature was maintained at 440°C for 4.0 h. A sodium silicate-containing phase agglomerated during the reaction. The reaction mixtures was cooled down and separated by sieving (mesh size: about 400 µm) to provide a fine fraction (<400 µm) and a coarse fraction (>400 µm). Each one of the fine fraction and the coarse fraction was washed with demineralized water (60°C) to provide a washed product. Table 5 provides an analysis (loss on ignition (LOI) and XRF analysis of the ash) of the coarse fraction before and after washing with water.

**Table 5: Analysis of an ashed sample of the coarse fraction of example IE3 taken before and after washing**

| **Analysis of coarse fraction before washing** | | |
|---|---|---|
| **Compound** | **Concentration** | **Unit** |
| Na₂O | 35.179 | % |
| MgO | - | % |
| Al₂O₃ | 1.145 | % |
| SiO₂ | 19.776 | % |
| P₂O₅ | 1.437 | % |
| SO₃ | - | % |
| K₂O | 0.362 | % |
| CaO | 1.454 | % |
| TiO₂ | - | ppm |
| Fe₂O₃ | 0.978 | % |
| Co₃O₄ | 416 | ppm |
| CuO | 0.102 | % |
| ZnO | 8.754 | % |
| SnO₂ | 2.109 | % |
| | | |
| Loss on ignition (LOI) | 28.41 | % |
| | | |

| **Analysis of coarse fraction after washing** | | |
|---|---|---|
| **Compound** | **Concentration** | **Unit** |
| Na₂O | 1.484 | % |
| MgO | 0.153 | % |
| Al₂O₃ | 0.477 | % |
| SiO₂ | 7.576 | % |
| P₂O₅ | 516.3 | ppm |
| SO₃ | 3.285 | % |
| K₂O | 0.116 | % |
| CaO | 1.55 | % |
| TiO₂ | 251.4 | ppm |
| Fe₂O₃ | 0.477 | % |
| Co₃O₄ | 700.1 | ppm |
| CuO | 483.3 | ppm |
| ZnO | 5.425 | % |
| SnO₂ | 0.152 | % |
| | | |
| Loss on ignition (LOI) | 79.11 | % |

## Claims

1. A method for processing a carbonaceous material, comprising:
(i) providing a carbonaceous material comprising carbon and a SiOz-containing solid;
(ii) combining the carbonaceous material with a solid alkali reagent to provide a solid composition;
(iii) heating the solid composition, thereby at least partially converting the SiOz-containing solid to a reaction product; and
(iv) separating the reaction product from the carbon.

2. The method according to claim 1, wherein the carbonaceous material is a pyrolysis product, which is preferably obtained from a process comprising pyrolysis of rubber waste which is at least partially derived from waste tires.

3. The method according to any one of the preceding claims, wherein the carbon is at least partially present in the form of a recovered carbon black.

4. The method according to any one of the preceding claims, wherein the SiO₂-containing solid comprises crystalline silica, amorphous silica, or a mixture thereof.

5. The method according to any one of the preceding claims, wherein the SiO₂-containing solid is part of a mixture of inorganic compounds, which preferably at least further comprises one or more zinc-containing compounds, and more preferably zinc oxide and/or zinc sulfide.

6. The method according to any one of the preceding claims, wherein the carbon is present in the carbonaceous material in an amount of at least 60 wt.%, and preferably at least 70 wt.%, based on a total weight of the carbonaceous material.

7. The method according to any one of the preceding claims, wherein the SiO₂-containing solid is part of a mixture of inorganic compounds, which is present in the carbonaceous material in an amount in a range of 5 to 40 wt.%, and preferably in a range of 10 to 30 wt.%, based on a total weight of the composition.

8. The method according to any one of the preceding claims, wherein the solid alkali reagent is selected from the group consisting of alkali metal oxides, alkali metal hydroxides, and any mixtures thereof, and preferably wherein the solid alkali reagent is NazO, NaOH, KOH, or a combination thereof, which is optionally used in combination with one or more additional solid alkali reagents.

9. The method according to any one of the preceding claims, wherein the heating of the solid composition is carried out at a temperature not exceeding 550°C, preferably not exceeding 500°C, and more preferably not exceeding 450°C.

10. The method according to any one of the preceding claims, wherein the heating of the solid composition is carried out under an atmosphere having a reduced oxygen content.

11. The method according to any one of the preceding claims, wherein the reaction product comprises an alkali silicate, preferably a sodium silicate.

12. The method according to any one of the preceding claims, wherein the separating comprises removing an agglomerate from a reaction mixture, which is obtained by the heating of the solid composition, and wherein the agglomerate comprises at least a partial amount of the reaction product.

13. The method according to any one of the preceding claims, wherein the separating comprises washing a reaction mixture, which is obtained from the heating of the solid composition, with an aqueous composition.

14. The method according to any one of the preceding claims, wherein the method is a method for processing a pyrolysis product comprising:
(i) providing a pyrolysis product which is obtained from a process comprising pyrolysis of rubber waste which is at least partially derived from waste tires, wherein the pyrolysis product comprises carbon and a SiO₂-containing solid;
(ii) combining the pyrolysis product with a solid alkali reagent to provide a solid composition,
(iii) heating the solid composition at a temperature not exceeding 550°C, thereby at least partially converting the SiOz-containing solid to a reaction product; and
(iv) separating the reaction product from the carbon.

15. A processed carbonaceous material which is obtainable by a method according to any one of claims 1 to 14.
